# EUROPEAN PATENT SPECIFICATION

(11) **EP 0 725 762 B1**
(45) Date of publication and mention of the grant of the patent: **03.06.1998**
(21) Application number: 95901696.5
(22) Date of filing: 25.10.1994
(51) Int. Cl.: C02F 1/44, C02F 1/00, B01D 61/00, B01D 69/00

(54) **METHOD FOR SEPARATING METALS AND ALCOHOLS FROM AN EMULSIFIED ORGANIC/AQUEOUS EFFLUENT**
METHODE ZUR TRENNUNG VON METALLEN UND ALKOHOLEN VON EINEM EMULGIERTEN ORGANISCHEN/WÄSSRIGEN ABWASSER
PROCEDE DE SEPARATION DE METAUX ET D'ALCOOLS D'UN EFFLUENT EMULSIONNE ORGANIQUE/AQUEUX

(30) Priority: 29.10.1993 US 146241
(43) Date of publication of application: 14.08.1996
(73) Proprietor: EXXON CHEMICAL PATENTS INC., Linden, New Jersey 07036-0710 (US)
(72) Inventor: KORIN, Amos, Weston, CT 06883 (US); BUTTS, Timothy, James, New York, NY 10021 (US)
(74) Representative: Mansell, Keith Rodney
(86) International application number: US9412176
(87) International publication number: WO9511860

(56) References cited:
- EP-A- 0 302 825
- US-A- 4 366 063
- US-A- 5 009 783
- US-A- 5 051 178

## Description

### TECHNICAL FIELD

The present invention relates to a method for manufacturing a stator for a rotating electric machine, for example an asynchronous machine, the stator comprising a stator core, substantially in the form of a hollow circular cylinder, and a tubular housing which, at the operating temperature of the machine, surrounds the stator core with a shrinkage fit, the stator core and the housing being manufactured as separate limits.

### BACKGROUND ART

Stators for electric machines of the intended kind have hitherto often been manufactured with, for example, housings cast in aluminium. Casting of such housings entails high tool costs, above all in the case of large machine diameters and, particularly when the housing is cast directly around the stator core, results in several difficult technical problems such as thermal emission to surrounding machine components, tendencies to cracking of the casting, etc., which have to be solved. Because of the heat generation during the casting process, the stator windings of the machine can be mounted in the stator core only after the casting of the housing.

It is further known to manufacture tubular blanks, preferably of aluminium, for stator housings by means of extrusion. In that connection, the housing is given such internal dimensions that, at the operating temperature of the machine, it makes contact with the stator core with a shrinkage fit which provides sufficient torque transmitting and heat transmitting capacity but, after heating, can be applied around the stator core. If the temperature increase of the housing is limited to a level which is not harmful for the other parts of the stator, this method of manufacture permits mounting of the stator windings of the machine in the stator core before the housing is applied, which is an advantage from the point of view of production technique. However, because of the manufacturing tolerances which are associated with extrusion of tubular blanks, the housing normally has to be machined internally to ensure, on the one hand, the necessary shrinkage fit and, on the other, that the heating of the housing when it is applied around the stator core can be limited to a level which is harmless to the other stator parts. Considerable demands are placed on the capacity of the machines which manufacture the extruded blanks, which renders the blanks expensive to manufacture. The blanks are also voluminous, which entails high transport costs in the event that they are manufactured at some other place than that where the stator in its entirety is manufactured. These latter disadvantages are, of course, accentuated with increasing stator diameter of the machines.

From EP-B-0 048 213 it is known to manufacture a housing of two or more extruded profiles, which, at their edges extending in the axial direction of the machine, exhibit a hook-shaped bar and a slot corresponding to the bar. The housing is held together by a hook-shaped bar on one profile engaging into the slot on the adjacent profile. The necessary grip between the housing and the stator core appears to be achieved by the bar resiliently engaging into the slot such that the housing is thereby kept against the stator core by a spring force. Especially in machines with large stator diameters and/or in the event that it is desirable for reasons of production technique to manufacture the housing from more than two profiles, for example four or more, this design probably leads to dimensioning problems and at least requires a strong dimensioning of the hook-shaped bar to ensure a sufficient grip between the housing and the stator core.

### SUMMARY OF THE INVENTION

The object of the invention is to provide a method for manufacturing a stator for a rotating electric machine, which method permits the stator windings of the machine to be mounted in the stator core before the housing of the stator is applied around the stator core, but which eliminates the operation involving internal machining of the housing as well as the above-mentioned problems associated with the manufacture of tubular blanks for housings and with housings comprising a plurality of resiliently composed profiles.

According to the invention, this is achieved by fixing a number of extruded profiles, each of which being defined by two edges and comprising a concave smooth limiting surface with a radius of curvature substantially corresponding to the external diameter of the stator core, in relation to each other such that their concave limiting surfaces form a tubular configuration with a predetermined internal diameter, the number and dimension of the profiles between the edges mentioned being so chosen that, placed together around the stator core, they would essentially surround the stator core without overlapping each other and such that gaps are formed between at least some of the edges thereof when they are fixed to the tubular configuration mentioned, and by welding the profiles together along their edges into a tubular housing with weld joints whose widths are adapted to fill up the gaps mentioned.

Advantageous improvements of the invention will become clear from the following description and the appended claims.

### BRIEF DESCRIPTION OF THE DRAWINGS

The invention will be explained in greater detail by description of embodiments with reference to the accompanying drawings wherein
- Figure 1A: shows in cross section a stator core manufactured according to the invention,
- Figure 1B: shows a detailed enlargement of Figure 1A,
- Figure 2: shows a stator core on which a housing according to Figure 1A is to be applied,
- Figure 3A: shows one of the profiles from which the housing according to Figure 1A is composed,
- Figure 3B: shows a detailed enlargement of Figure 3A, and
- Figure 4: shows a device for manufacturing a housing according to the invention.

### DESCRIPTION OF THE PREFERRED EMBODIMENTS

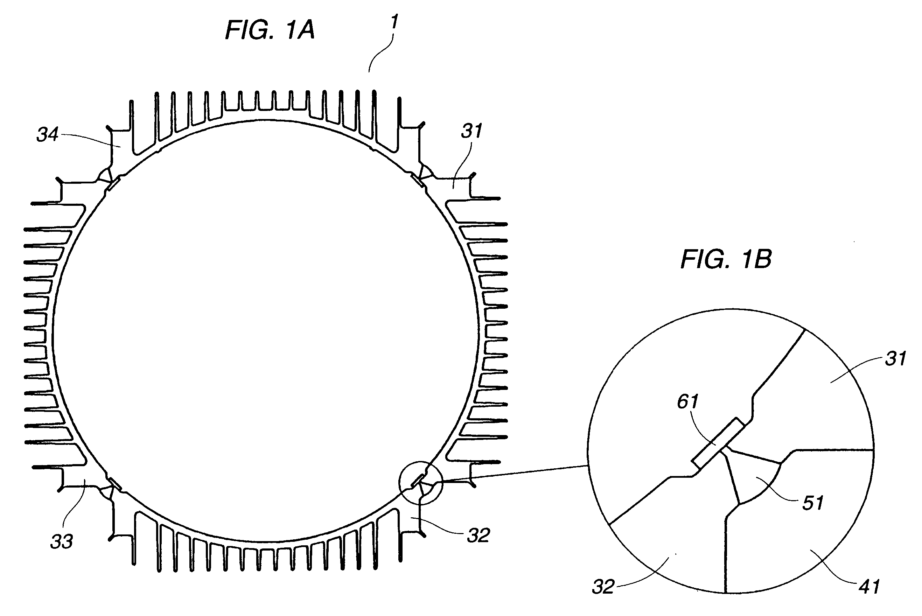

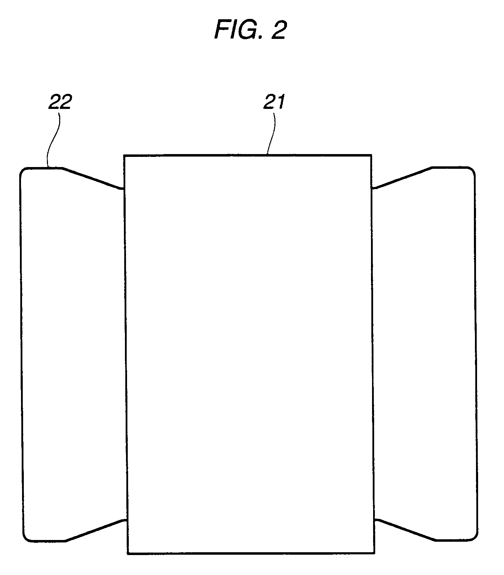

Figure 1A shows in cross section a tubular housing 1 for a stator for an electric asynchronous machine. The housing is intended to surround a stator core 21, schematically shown in Figure 2. The stator core substantially has the shape of a hollow circular cylinder with a known external diameter D1. At the internal cylindrical limiting surface of the stator core, slots for the stator windings 22 of the machine are provided in a known manner (not shown in Figure 2). These stator windings may be placed in their slots before the housing, manufactured according to the invention, is applied onto the stator core.

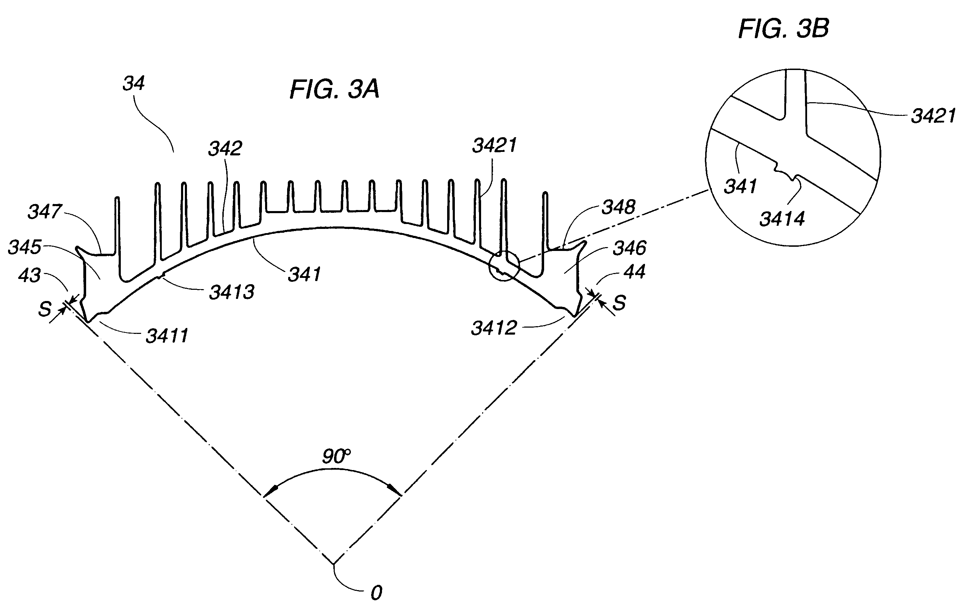

The housing is composed of four identical extruded profiles 31, 32, 33, 34, of which profile 34 is shown in Figure 3A. The concave limiting surface 341 facing the stator core consists of a smooth surface, formed by generatrices along a circular arc whose centre in the figure is designated 0. The arc has a radius of curvature substantially corresponding to the external diameter of the stator core. The edges 345, 346 of the profile extend in the axial direction of the stator and the surface 341 exhibits, at each edge of the profile, recesses 3411, 3412 in a radial direction extending along the edges of the profile. In the direction of the arc, the extent of the profile comprises an angle of 90° less an arc length 2S, such that in relation to a symmetry line for the profile, at each edge of the concave surface, a play S is formed between the edge and a radius from 0 which forms an angle of 45° with the symmetry line. For a machine with the external diameter D1 of the stator = 200 mm, the play S may advantageously be chosen to be about 1 mm. The convex limiting surface 342, facing away from the stator core, exhibits a number of cooling ribs 3421 for improving the cooling of the profile and the edges of the profile exhibit a bevel such that the gaps 41, 42, 43, 44 which are formed by the play S between two adjacently arranged profiles are wider at the convex limiting surface than at the concave one. In Figure 3A the bevel of the edges make an angle of 30° with the radial direction.

Along their edges the profiles are joined into a tube by means of welds in the axial direction of the machine. Such a weld joint is shown in detail in Figure 1B. The weld joint 51 fills up the gap 41 between the profiles 31 and 32. It is advantageous to arrange in the recess an axially extending supporting bar 61 for the weld. The supporting bar is of a material which during the welding fuses with the weld joint and is given such dimensions that the bar is completely accommodated in the space formed by the recesses on two adjacently located profiles.

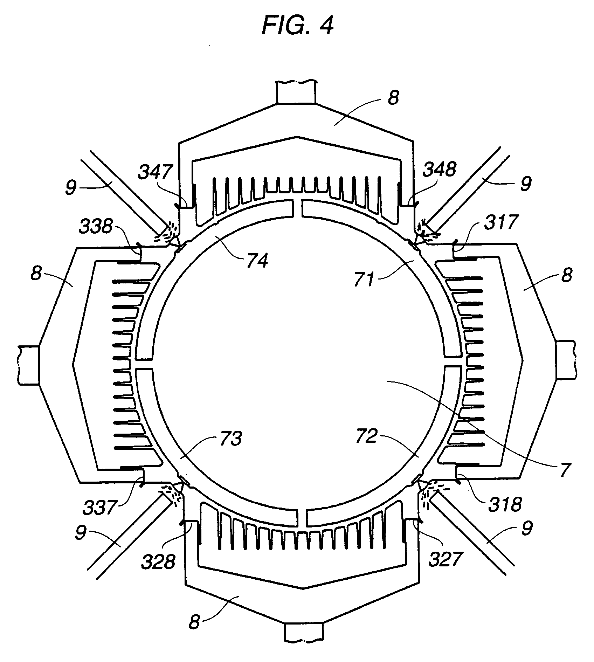

During the welding together of the profiles, these are fixed in relation to each other by being arranged, as shown in Figure 4, around an essentially cylindrical mandrel 7 with a predetermined diameter D2 in such a way that their concave limiting surfaces form a tubular configuration with an internal diameter corresponding to the external diameter of the mandrel. The mandrel comprises four jaws 71, 72, 73, 74 which in a manner known per se, but not shown in detail in the figure, are connected to each other. Each one of the jaws comprises in the tangential direction an arc of 90° less an arc length 2B. Profiles and jaws are placed in the tangential direction in such a way in relation to each other that one jaw supports adjacent parts of two adjoining profiles. Also in a manner known per se but not shown in detail in the figure, the jaws are essentially concentrically displaceable in a radial direction between two radial positions. The mandrel, with the jaws in their external radial position, is turned in a lathe into the desired predetermined diameter D2. The diameter of the mandrel is so chosen in relation to the external diameter D1 of the stator core that, on the one hand, the welded-together housing, which at room temperature will have the internal diameter D2, after heating to a temperature which is harmless for the other parts of the machine, for example 180°C, may be applied around the stator core but, on the other hand, at the operating temperature of the machine, makes contact with the stator core with a desired shrinkage fit. Further, the arc 2S is so chosen that gaps are formed between at least some of the edges of the profiles when they are fixed to the tubular configurations. To ensure good contact with the mandrel, the profiles are pressed against the mandrel with pistons 8 which make contact with a compressive force against support surfaces 317, 318, 327, 328, 337, 338, 347, 348 on the profiles. The compressive force is achieved, for example, by compressed air. The welding of the profiles then takes place by applying axially extending weld joints along the edges of the profiles whereby the weld joints automatically fill up the gaps which, when the profiles have been applied against the mandrel, are formed between adjacent profiles. Thus, the weld joints are given a width which gives the tubular housing the desired internal diameter and their width is automatically adapted to compensate for the width tolerances which have arisen during the extrusion of the profiles. The welding may advantageously be carried out by a welding robot (not shown in the figure) which is programmed for the purpose and which operates welding guns 9 along a predetermined track. When the welding is completed, the jaws are moved to their internal radial position, whereby the gaps existing between the jaws, when the jaws are located in their outer radial position, are reduced in width to adapt to the reduced circumference of the mandrel. Thereafter, the tubular housing can now be detached from the mandrel in order to be applied around the stator core, in a subsequent operation, after heating. The machining of the housing to form supports for feet and terminal box may be performed in a manner known per se, and advantageously before the housing is applied around the stator core.

To secure the shrinkage fit by which the housing surrounds the stator core, especially in the event of a short circuit at high operating temperature, as shown in the detailed enlargement in Figure 3B the concave limiting surface of the profiles may be formed to comprise axially extending fins 3413, 3414 facing the stator core, which engage into corresponding slots in the stator core (not shown in Figure 2).

With a method according to the invention, a simple modularizable system for manufacturing housings of the intended kind is achieved. The dimensions of the extruded profiles may be chosen in view of their optimum manufacturing and transport costs. Extrusion of profiles permits closer tolerances for shape and dimension than extrusion of tubular blanks, and since the method of manufacture according to the invention provides an automatic adaptation to the desired internal diameter for the finished housing, stator housings also for machines with large diameters can be manufactured in a simple manner with good control of shape and dimension without having to perform internal machining.

The invention is not limited to the embodiment shown but a plurality of modifications are feasible within the scope of the appended claims, for example for the method of fixing the profiles in relation to each other prior to welding them together. The number of profiles from which the housing is to be manufactured may, of course, based on production economy considerations, be chosen to be different from four. If the chosen number is N, the extent of the profile between its edges is chosen to comprise an angle 360°/N less one arc length 2S. The supporting bar for the welds may, alternatively, be formed, for example, from a ceramic material which during the welding does not fuse with the weld joint, whereby the supporting bar in this case, after the welding, is removed and will not constitute part of the housing.

## Claims

1. A method for manufacturing a stator for a rotating electric machine, for example an asynchronous machine, said stator comprising a stator core (21), substantially in the form of a hollow circular cylinder with a known external diameter, and a tubular housing (1) which at the operating temperature of the machine surrounds the stator core with a shrinkage fit, the stator core and the housing being manufactured as separate units, **characterized** in that the manufacture of the housing comprises the following steps:
a number of extruded profiles (31, 32, 33, 34), each of which being defined by two edges (345, 346) and comprising a concave smooth limiting surface (341) which is located between said edges and is formed by generatrices along an arc with a radius of curvature substantially corresponding to the external diameter of the stator core, are fixed in relation to each other such that their concave limiting surfaces form a tubular configuration with a predetermined internal diameter, the number and dimension of the profiles between said edges being so chosen that, placed together around the stator core, they would essentially surround said stator core without overlapping each other and such that gaps (41 42, 43, 44) are formed between at least some of their edges when they are fixed to said tubular configuration, and
the profiles are welded together along their edges into a tubular housing by means of weld joints (51), the width of which is adapted to fill up said gaps.

2. A method according to claim 1, **characterized** in that the profiles are fixed in relation to each other by being applied around an essentially cylindrical mandrel (7) with an external diameter corresponding to the predetermined internal diameter of the tubular configuration.

3. A method according to claim 1, **characterized** in that the profiles are applied against the mandrel by being pressed thereagainst by means of a pressure device (8).

4. A method according to any of the preceding claims, wherein the concave limiting surface of the profiles at the edges of the profiles exhibits recesses (3411, 3412) extending along said edges, **characterized** in that when the profiles are welded together, a supporting bar (61) for the weld joint is placed in the recesses between two adjoining profiles.

## Patentansprüche

1. Herstellungsvertahren für einen Stator einer rotierenden elektrischen Maschine, beispielsweise einer Asynchronmaschine, wobei der Stator einen vorwiegend in Gestalt eines kreisförmigen Hohlzylinders vorliegenden Statorkern (21) und ein rohrförmiges Gehäuse (1) umfasst, welches bei Arbeitstemperatur der Maschine den Statorkern mit Schrumpfpassung umschliesst, wobei der Stator und das Gehäuse als gesonderte Einheiten hergestellt werden, **dadurch gekennzeichnet,** dass die Herstellung des Gehäuses folgende Schritte umfasst:
- eine Anzahl stranggepresster Profile (31, 32, 33, 34), jeweils von zwei Kanten (345, 346) begrenzt und eine konkave glatte Begrenzungsfläche (341) umfassend, die zwischen den erwähntne Kanten verlegt ist und von Generatrixen entlang eines Bogens mit einem im wesentlichen dem Aussendurchmesser des Statorkernes entsprechenden Krümmungsradius gebildet wird, miteinander so befestigt werden, dass ihre konkave Begrenzungsfläche eine Rohrtorm mit einem vorausbestimmten Innendurchmesser bildet, wobei die Anzahl und die Dimensionen der Profile zwischen besagten Kanten so gewählt sind, dass sie zusammen um den Statorkern herumgelegt im wesentlichen besagten Statorkern ohne einander zu überlappen umschliessen und so, dass Spalte (41, 42, 43 , 44) zwischen wenigstens einigen ihrer Kanten beim Festsetzen an die besagte rohrähnliche Form gebildet werden, und
- die Profile werden entlang ihrer Kanten zu einem rohrförmigen Gehäuse mit Hilfe von Schweissnähten zusammengeschweisst, deren Breite vorgesehen ist besagte Spalte auszufüllen.

2. Verfahren gemäss Patentanspruch 1, **dadurch gekennzeichnet,** dass die Profile zueinander festgelegt werden, indem sie um einen im wesentlichen zylindrischen Dorn (7) angeordnet werden mit einem Aussendurchmesser, der dem vorausbestimmten Innendurchmesser der Rohrform entspricht.

3. Verfahren gemäss Patentanspruch 1, **dadurch gekennzeichnet,** dass die Profile gegen den Dorn durch ein Anpressen gegen diesen mit Hilfe einer Druckvorrichtung (8) angelegt werden.

4. Verfahren gemäss irgendeinem der vorhergehenden Patenanspüche, wobei die konkave Begrenzungsfläche der Profile an den Profilkanten Aussparungen (3411, 3412) entlang besagten Kanten aufweist, **dadurch gekennzeichnet,** dass ein Stützstange (61) für die Schweissnaht beim Zusammenschweissen der Profile in die Aussparungen zwischen zwei benachbarten Profilen verlegt ist.

## Revendications

1. Procédé de fabrication d'un stator pour une machine rotative électrique, par exemple une machine asynchrone, le stator comportant un noyau (21) statorique, sensiblement sous la forme d'un cylindre creux, de section transversale circulaire, ayant un diamètre extérieur connu, et une carcasse (1) tubulaire qui, à la température de fonctionnement de la machine, entoure le noyau statorique par un ajustement serré par retrait, le noyau statorique et la carcasse étant fabriqués en tant qu'unités distinctes, caractérisé en ce que la fabrication de la carcasse comporte les étapes suivantes :
un certain nombre de profilés (31, 32, 33, 34) extrudés, dont chacun est défini par deux bords (345, 346) et comportant une surface (341) concave de limitation lisse qui est située entre des bords et est formée par des génératrices le long d'un arc ayant un rayon de courbure correspondant sensiblement au diamètre extérieur du noyau statorique, sont fixés l'un par rapport à l'autre de sorte que leurs surfaces concaves de limitation forment une configuration tubulaire ayant un diamètre intérieur déterminé à l'avance, le nombre et la dimension des profilés entre les bords étant choisis de sorte que, placés ensemble autour du noyau statorique, ils entoureraient sensiblement le noyau statorique sans se chevaucher l'un l'autre et de sorte que des interstices (41, 42, 43, 44) soient formés entre au moins certains de leurs bords lorsqu'ils sont fixés à la configuration tubulaire, et
les profilés sont soudés ensemble le long de leurs bords en une carcasse tubulaire au moyen de joints (51) soudés, dont la largeur est adaptée pour remplir les interstices.

2. Procédé suivant la revendication 1, caractérisé en ce que les profilés sont fixés l'un par rapport à l'autre en étant appliqués autour d'un mandrin (7) sensiblement cylindrique, ayant un diamètre extérieur correspondant au diamètre intérieur déterminé à l'avance de la configuration tubulaire.

3. Procédé suivant la revendication 1, caractérisé en ce que les profilés sont appliqués contre le mandrin en y étant pressés au moyen d'un dispositif (8) de pression.

4. Procédé suivant l'une quelconque des revendications précédentes, dans lequel la surface concave de limitation des profilés aux bords des profilés présente des évidements (3411, 3412) s'étendant le long des bords, caractérisé en ce que, lorsque les profilés sont réunis par soudage, une barre (61) de support du joint soudé est placée dans les évidements entre deux profilés adjacents.
